# EUROPÄISCHE PATENTSCHRIFT

(11) **EP 1 608 520 B1**
(45) Veröffentlichungstag und Bekanntmachung des Hinweises auf die Patenterteilung: **02.08.2006**
(21) Anmeldenummer: 04723907.4
(22) Anmeldetag: 27.03.2004
(51) Int. Cl.: B60C 23/04

(54) **FORMTEIL ZUR VERBINDUNG MIT EINER FELGE UND FELGE, DIE MIT EINEM FORMTEIL VERBUNDEN IST**
MOULDED PART FOR CONNECTION TO A WHEEL RIM AND WHEEL RIM WHICH IS CONNECTED TO A MOULDED PART
PIECE MOULEE A RACCORDER A UNE JANTE ET JANTE RACCORDEE A UNE PIECE MOULEE

(30) Priorität: 27.03.2003 DE 10314498
(43) Veröffentlichungstag der Anmeldung: 28.12.2005
(73) Patentinhaber: Beru Aktiengesellschaft, 71636 Ludwigsburg (DE)
(72) Erfinder: HOUBEN, Hans, 52146 Würselen (DE); VON WATZDORF, Henning, 71642 Ludwigsburg (DE); ALGGAIER, Martin, 751634 Ludwigsburg (DE)
(74) Vertreter: Twelmeier, Ulrich
(86) Internationale Anmeldenummer: PCT/EP2004/003276
(87) Internationale Veröffentlichungsnummer: WO 2004/085177

(56) Entgegenhaltungen:
- EP-A- 0 816 137
- DE-A- 19 529 289

## Beschreibung

Die Erfindung geht von einem Formteil zur Verbindung mit einer Felge an einer im Felgenbett liegenden Stelle aus, welches eine zur Anlage am Felgenbett bestimmte Kontaktfläche hat.

Ein gattungsgemäßes Formteil, ausgeführt als Schutzgehäuse für ein Elektronikbaustein, ist aus der EP-A-0 816 137 bekannt. Aus der EP 0 751 017 B1 ist ferner ein solches Formteil bekannt, und zwar in Form eines Gehäuses, welches eine Einrichtung zum Messen des Luftdrucks in einem Luftreifen enthält, welcher auf die Felge aufgezogen ist. Das bekannte Gehäuse ist fest mit dem Fuß eines Ventils verschraubt. Zu diesem Zweck ist die Ventilbohrung, durch die hindurch Luft in den Reifen gepumpt werden kann, als Gewindebohrung ausgebildet und das Gehäuse der Vorrichtung zum Messen des Luftdruckes hat ein Langloch, durch das hindurch eine hohle Schraube in das Gewinde der Ventilbohrung gedreht werden kann. Die Schraube wird fest angezogen, so daß danach das Gehäuse am Ventilfuß befestigt ist. Der Ventilfuß besteht zu diesem Zweck aus Metall und hat eine kugelabschnittförmige äußere Gestalt, mit welcher er sich in eine Ausnehmung des Gehäuses der Vorrichtung zum Messen des Reifendruckes einfügt, welche zu diesem Zweck eine komplementäre Kugelkalotte aufweist. Damit sich das Gehäuse am Felgenbett abstützen kann, hat das Gehäuse auf seiner dem Felgenbett zugewandten Seite zwei der Abstützung auf dem Felgenbett dienende Füße, welche eine das Felgenbett berührende Kontaktfläche haben. Damit diese bei unterschiedlich gestalteten Felgen das Felgenbett tatsächlich erreichen, kann das Gehäuse infolge des vorgesehenen Langlochs in unterschiedlichen Orientierungen bezüglich der Längsachse der Ventilbohrung an dem Ventilfuß festgelegt werden. Infolge dieser Ausführungsform kann ein- und dasselbe Gehäuse der Vorrichtung zum Messen des Luftdrucks in Rädern mit unterschiedlich gestalteten Felgen stabil montiert werden. Nachteilig ist jedoch, daß man für die Befestigung des Gehäuses ein speziell angepaßtes Ventil benötigt, dessen Ventilbohrung im Ventilfuß als Gewindebohrung ausgebildet ist und eine durchbohrte Spezialschraube aufnimmt, mit welcher das Gehäuse am Ventilfuß festgeschraubt wird. Das speziell ausgebildete Ventil und die durchbohrte Spezialschraube sind teuer.

Ein Rad mit einer Vorrichtung zum Messen des Reifendrucks ist auch aus der DE 196 26 145 A1 bekannt. Bei diesem bekannten Rad wird nicht das Gehäuse der Vorrichtung zum Messen des Luftdruckes mit dem Ventilfuß verschraubt, sondern statt dessen eine Feder, deren freies Ende das Gehäuse in der Weise beaufschlagt, daß das Gehäuse zwischen dem freien Ende der Feder und der Felge des Fahrzeugrades eingeklemmt wird, und zwar so, daß sich das Gehäuse einerseits auf dem Grund des Felgenbettes und andererseits an zwei Abstützstellen an der Flanke des Felgenbettes abstützt. Die Feder drückt das Gehäuse sowohl gegen den Grund des Felgenbettes als auch gegen die Flanke des Felgenbettes, so daß das Gehäuse an vier Seiten umfaßt ist, nämlich an zwei Seiten von der Feder, an einer Seite vom Felgenbett und an einer Seite von der Flanke des Felgenbettes. Nachteilig ist, daß für das Befestigen der Feder am Ventilfuß wie bei der aus der EP 0 751 097 B1 bekannten Anordnung eine teure durchbohrte Spezialschraube benötigt wird. Nachteilig ist ferner, daß für unterschiedlich geformte Felgen unterschiedlich geformte Federn benötigt werden, um das Gehäuse gegen die Felge zu drücken und dadurch zu fixieren.

Es ist auch bereits vorgeschlagen worden, das Gehäuse einer Einrichtung zum Messen des Luftdrucks in Luftreifen mittels eines Spannbandes auf der Felge zu fixieren, welches die Felge auf dem Felgenbett liegend umschließt. Ein solches Spannband hat den Nachteil, dass es zusammen mit dem erforderlichen Spannschloss verhältnismäßig schwer ist, für unterschiedlich große Felgen nach dem Spannen individuell gekürzt werden muß und sich durch Temperatureinfluß und Ermüdung lockern kann.

Demgegenüber liegt der vorliegenden Erfindung die Aufgabe zugrunde, einen Weg aufzuzeigen, wie ein Gehäuse, welches eine Einrichtung zur Messung des Luftdruckes in Luftreifen enthält, mit weniger Aufwand und unter Einsatz von möglichst wenig zusätzlicher Masse an unterschiedlich großen Felgen von luftbereiften Rädern befestigt werden kann.

Diese Aufgabe wird gelöst durch ein Formteil, mit dem im Anspruch 1 angegebenen Merkmalen sowie durch eine Felge mit einem daran befestigten Formteil mit den im Anspruch 19 angegebenen Merkmalen. Vorteilhafte Weiterbildungen der Erfindung sind Gegenstand der Unteransprüche.

Das erfindungsgemäße Formteil kann ein Gehäuse sein, insbesondere kann es das Gehäuse selbst sein, welches zur Aufnahme einer Einrichtung zur Messung des Luftdrucks und/oder der Temperatur im Luftreifen dient. In diesem Fall wird für die Ausbildung der Kontaktflächen allenfalls eine vernachlässigbare zusätzliche Masse benötigt. Das Gehäuse kann weitere Komponenten enthalten, insbesondere eine Batterie, einen Sender, einen Funkempfänger, einen Rollsensor, einen Fliehkraftsensor und dergleichen mehr. Entscheidend ist für die Verwirklichung der Erfindung, dass das Gehäuse eine Kontaktfläche mit den im Patentanspruch 1 angegebenen Merkmalen hat.

Das Formteil muß kein Gehäuse sein, sondern kann auch als Träger oder Halterung für einen auf den Formteil zu befestigenden Gegenstand ausgebildet sein, insbesondere als Träger oder Halterung für das Gehäuse einer Einrichtung zur Messung des Luftdruckes im Luftreifen. Die Verbindung zwischen einem als Träger oder Halterung dienenden Formteil und dem Gegenstand, den es aufnimmt, kann auf unterschiedliche Weise geschehen und nach Zweckmäßigkeitsgesichtspunkten erfolgen, zum Beispiel durch eine stoffschlüssige Verbindung, durch Verschrauben oder durch eine formschlüssige Verbindung, zum Beispiel durch Aufrasten auf das Formteil. Entscheidend für die Verwirklichung der Erfindung ist auch in diesem Fall, dass das Formteil eine dem Felgenbett zugewandte Kontaktfläche mit den im Patentanspruch 1 angegebenen Merkmalen hat. Auch in diesem Fall, dass das Formteil ein Träger oder eine Halterung oder dergleichen gesondertes Montagehilfsteil ist, kann es mit einem Minimum an Masse zum Beispiel aus Kunststoff hergestellt sein, so dass durch den Träger der Masse des an der Felge zu befestigenden Gegenstandes keine wesentliche zusätzliche Masse hinzugefügt wird.

Mit der Erfindung werden wesentliche Erfolge erzielt:
◆ Ein Formteil passt auf alle möglichen Felgen.
◆ Eine Befestigung am Ventil entfällt. Deswegen muß kein teures Spezialventil eingesetzt werden, vielmehr können herkömmliche, preiswerte Ventile zum Einsatz kommen.
◆ Bei der Gestaltung des Formteils beziehungsweise eines Gehäuses, welches vom Formteil aufgenommen wird, muß keine Rücksicht auf die Ventilausbildung genommen werden.
◆ Das Formteil kann an beliebiger Stelle des Felgenbettes befestigt werden, insbesondere in größerer Entfernung vom Rand der Felge an der tiefsten Stelle des Felgenbettes. Das ist günstig für das Vermeiden von Unwuchten. Es verringert obendrein die Gefahr, dass das Formteil oder der Gegenstand, den es trägt, bei der Reifenmontage beschädigt wird.
◆ Für die Befestigung wird ein Minimum an Masse benötigt.
◆ Die Klebeflächen lassen sich auf das Erreichen hoher Zugfestigkeiten der Klebeverbindung optimieren.
◆ Die Kosten für die Herstellung und Befestigung des Formteils sind unerreicht niedrig.
◆ Durch Variation von Größe, Neigung und/oder Krümmung der Kontaktfläche oder von Abschnitten davon kann die Klebespaltgeometrie für die an unterschiedlichen Rädern auftretenden Beanspruchungen der Klebeverbindung optimiert werden.

Die Wirkungsweise und die Vorteile der Erfindung werden deutlich bei der nachfolgenden Erläuterung von zwei besonders bevorzugten Ausführungsbeispielen der Erfindung.

In einer ersten Ausführungsform der Erfindung ist die Kontaktfläche des Formteils so ausgebildet, dass eine Schar von zueinander parallelen ersten Ebenen die Kontaktfläche jeweils entlang einer konkav gekrümmten Kurve schneidet, welche wenigstens auf einer Seite einer die Kontaktfläche unterteilenden zweiten Ebene, welche senkrecht zu den ersten Ebenen verläuft, eine Folge aus gekrümmten Abschnitten aufweist, deren Krümmung mit zunehmenden Abstand von der zweiten Ebene abnimmt. Innerhalb eines gekrümmten Abschnittes ist die Krümmung längs der Kurve vorzugsweise konstant, so dass der jeweilige gekrümmte Abschnitt der Kurve ein Kreisbogen ist. In dieser ersten Ausführungsform sollen die gekrümmten Abschnitte eine Krümmung aufweisen, welche mit der Krümmung des Felgenbetts unterschiedlicher Felgen, auf die das Formteil passen soll, übereinstimmt oder ihr eng angepasst ist. Dann gibt es für jedes Felgenbett mit einem bestimmten Durchmesser wenigstens einen dazu passenden gekrümmten Abschnitt der Kontaktfläche, mit welchem sich das Formteil paßgenau an das Felgenbett anlegen kann. Zwischen dem anliegenden Abschnitt des Formteils und dem Felgenbett besteht dabei ein konstanter oder im wesentlichen konstanter Klebespalt, der sich zur Ausbildung einer festen Klebeverbindung besonders gut eignet und ohne Schwierigkeiten so lang bemessen werden kann, dass die gewünschte Zugfestigkeit der Klebeverbindung erreicht wird.

Eine so ausgebildete Kontaktfläche passt sich gut an unterschiedlich große Felgen an, welche sich im Durchmesser des Felgenbettes unterscheiden. Felgen, deren Felgenbett den kleinsten Durchmesser hat, legen sich an einen oder zwei Abschnitte der Kontaktfläche in unmittelbarer Nachbarschaft der zweiten Ebene an; Felgen deren Felgenbett einen größeren Durchmesser hat, werden sich an einen oder zwei von der zweiten Ebene weiter entfernte Abschnitte der Kontaktfläche anlegen, wobei die Abschnitte um so weiter von der zweiten Ebene entfernt sind, je größer der Durchmesser des Felgenbettes ist. Damit ist eine zuverlässige stoffschlüssige Verbindung, insbesondere eine Verklebung des Formteils mit Felgen möglich, die sich im Durchmesser des Felgenbettes unterscheiden, denn für alle möglichen Felgenbettdurchmesser kann eine hinreichend lange Verbindungszone erhalten werden. Die für einen Klebstoff zulässige Zugbeanspruchung hängt nämlich von der Höhe des Klebespaltes ab, welche einen Maximalwert nicht überschreiten soll, der von der Natur des Klebstoffes und von der zu beherrschenden Zugbeanspruchung der Klebeschicht abhängt. Würde eine zylindrische Fläche, um die es sich bei einem Felgenbett handeln kann, mit einem ebenen Abschnitt einer Kontaktfläche verbunden, dann erweiterte sich der Klebespalt, der von der Stelle ausgeht, an welcher die ebene Kontaktfläche das Felgenbett unmittelbar berührt, bei einem Felgenbett mit dem kleinsten Durchmesser am stärksten und bei einem Felgenbett mit dem größten Durchmesser am wenigsten. Die wirksame Verbindungszone, welche dort endet, wo die Klebespalthöhe ein vorgegebenes Maximum erreicht, wäre also bei einer zwischen einem zylindrischen Felgenbett und einer ebenen Kontaktfläche ausgebildeten Klebezone für den kleinsten Felgenbettdurchmesser am kleinsten und für den größten Felgenbettdurchmesser am größten. Die Erfindung ermöglicht demgegenüber eine Verlängerung der wirksamen Klebezone insbesondere für die Anwendungsfälle, in denen der Felgenbettdurchmesser am kleinsten und eine Verlängerung der Klebezone am wichtigsten ist.

Vorzugsweise schließen die unterschiedlich gekrümmten Abschnitte der Kontaktfläche unmittelbar aneinander an, so dass sich zwischen zwei aufeinanderfolgenden Abschnitten die Krümmung der Kontaktfläche sprunghaft ändert, wobei aber insgesamt ein konkaver Verlauf der Kurve erhalten bleibt, bei welchem der Abstand der Kurve von der "zweiten" Ebene über die jeweiligen gekrümmten Abschnitte gemittelt abnimmt. Diese Ausbildung des Formteils ermöglicht eine besonders kurze Kontaktfläche. Es ist aber auch möglich, wenn es aus anderen Gesichtspunkten erwünscht sein sollte, die einzelnen gekrümmten Abschnitte, die den verschiedenen Felgenbettdurchmessern entsprechen, nicht unmittelbar aneinander anschließen zu lassen, sondern einen Abstand zwischen Ihnen zu lassen, wobei die den Abstand überbrückenden Oberflächenbereiche für keinen der in Frage kommenden Felgenbettdurchmesser an der Klebeverbindung teilnehmen müssen.

Auch wenn die Abschnitte der Kontaktfläche, die für die stoffschlüssige Verbindung mit dem Felgenbett benutzt werden, gekrümmt sind, ist es möglich und von Vorteil, die Nachbarabschnitte eines zur Anlage am Felgenbett kommenden Abschnittes der Kontaktfläche zur Ausbildung der Klebeverbindung zusätzlich heranzuziehen. Das ist insbesondere dann von Bedeutung, wenn die Kontaktfläche auf eine Vielzahl von Felgenbetten mit unterschiedlichen Durchmessern passen soll und die einzelnen gekrümmten Abschnitte der Kontaktfläche nur kurz ausgebildet werden können. Die dem unmittelbar kontaktgebenden Abschnitt der Kontaktfläche benachbarten Kontaktflächen können dann mit einem sich fortschreitend öffnenden Klebespalt zur Ausbildung der Klebeverbindung ergänzend herangezogen werden. In diesen Fällen ist es von Vorteil, jeweils den ersten und den letzten Endabschnitt in der Folge von Abschnitten der Kontaktfläche länger auszubilden als die zwischen ihnen liegenden Abschnitte, weil die Endabschnitte nur noch auf einer Seite einen Nachbarabschnitt haben, welcher zur Klebeverbindung beitragen kann.

Die gekrümmten Abschnitte der Kontaktfläche können gleich oder annähernd gleich lang gewählt werden. Sie können aber auch gezielt unterschiedlich lang gewählt werden, um sie für die an unterschiedlichen Felgen auftretenden Beanspruchungen der Klebeverbindung zu optimieren. So kann es vorteilhaft sein, die Abschnitte um so länger auszubilden, je kleiner der Durchmesser des Felgenbettes ist, zu dem sie passen sollen, so dass der Abschnitt, welcher der zweiten Ebene am nächsten liegt, die größte Länge aufweist. Da die sprunghafte Änderung der Krümmung, welche zwischen aufeinanderfolgenden Abschnitten der Kontaktfläche auftritt, in der Nachbarschaft der zweiten Ebene am größten ist, kann dort der einem auf eine bestimmte Felge passenden Abschnitt benachbarte Abschnitt weniger zur wirksamen Klebespaltlänge beitragen als bei Abschnitten, Welche in größerer Entfernung von der zweiten Ebene liegen. Um diesen Nachteil auszugleichen, ist es von Vorteil, wenn der Abschnitt, welcher der zweiten Ebene am nächsten liegt, die größte Länge hat.

Es ist zweckmäßig, die Anzahl der gekrümmten Abschnitte auf der betreffenden Seite, insbesondere auf beiden Seiten der zweiten Ebene auf die Felgenbettdurchmesser auszurichten, für welche das Formteil passen soll.

In einer zweiten Ausführungsform der Gestaltung der Kontaktfläche schneidet diese eine Schar von zueinander parallelen ersten Ebenen jeweils entlang einer konkaven Kurve, welche wenigstens auf einer Seite einer die Kontaktfläche unterteilenden zweiten Ebene, welche senkrecht zu den ersten Ebenen verläuft, wenigstens einen Abschnitt aufweist, welcher eine mit zunehmendem Abstand von der zweiten Ebene stetig abnehmende Krümmung hat. Zu dieser Ausführungsform gelangt man, wenn man ausgehend von der Ausführungsform gemäß Patentanspruch 3 in einer Kontaktfläche von vorgegebener Länge die Anzahl der gekrümmten Abschnitte der Kontaktfläche gegen unendlich streben läßt. Das zeigt, dass beiden Ausführungsformen ein gemeinsamer Erfindungsgedanke zugrunde liegt.

Im Fall der zweiten Ausführungsform, in welcher die Kontaktfläche eine sich stetig ändernde Krümmung hat, sollte sie wenigstens auf einer der beiden Seiten der zweiten Ebene auf ihrer ganzen Länge eine mit zunehmenden Abstand von der zweiten Ebene abnehmende Krümmung haben. Vorzugsweise sollte die Kontaktfläche aber auch in dieser Ausführungsform, wie vorzugsweise auch in der ersten Ausführungsform, den beanspruchten Verlauf zu beiden Seiten der zweiten Ebene aufweisen, damit zu beiden Seiten der zweiten Ebene ein gleichartiger, insbesondere ein symmetrischer Kontakt mit unterschiedlich gekrümmten Felgenbetten möglich ist. Letzteres ist besonders von Vorteil, weil es das Auftreten von Drehmomenten an der Klebstoffschicht minimiert.

Grundsätzlich ist es möglich, die Kontaktfläche auf einer Seite der zweiten Ebene anders, insbesondere einfacher, auszugestalten, als auf der anderen Seite der zweiten Ebene, zum Beispiel durch Vorsehen von lediglich einer ebenen Kontaktfläche auf einer Seite der zweiten Ebene, doch ist das nicht bevorzugt, vielmehr wird eine symmetrische Ausbildung bevorzugt. Möglich ist es auch, Mischformen der beiden Ausführungsformen für die Ausbildung der Kontaktfläche zu bilden. Die erste Ausführungsform mit einer Folge von bogenförmigen Abschnitten der Kontaktfläche mit unterschiedlicher Krümmung ist dann besonders geeignet, wenn die Felgen, auf die das Formteil passen soll, ein Felgenbett mit sehr geringen Maßtoleranzen haben. Das ist gegenwärtig jedoch nicht der Regelfall. Beim Auftreten größerer Maßtoleranzen im Felgenbett bewährt sich die zweite Ausführungsform gemäß Patentanspruch 8 besser, so dass sie besonders bevorzugt ist.

Maßtoleranzen spielen nicht nur in Umfangsrichtung der Felge eine Rolle, sondern auch in deren Querrichtung. Insbesondere kann nicht davon ausgegangen werden, dass das Felgenbett immer eine zylindrische Gestalt hat. In vorzugsweiser Weiterbildung der Erfindung ist deshalb vorgesehen, dass die Kontaktfläche längs der Schnittlinien mit dritten Ebenen, welche die genannte Kurve rechtwinklig schneiden, konvex verläuft. Wäre das Felgenbett durchweg exakt zylindrisch, wäre es zur Erzielung einer optimalen Klebefläche am besten, die Schnittlinien würden nicht konvex, sondern geradlinig verlaufen. Da man in der Praxis aber nicht durchweg von zylindrischen Felgenbetten ausgehen kann, stellt es unter dem Gesichtspunkt, dass man mit ein- und demselben Formteil für eine Mehrzahl von Felgenbettformen eine hinreichend große Klebefläche erreichen will, einen günstigen Kompromiß dar, wenn die Kontaktfläche längs der Schnittlinien mit den dritten Ebenen, welche die genannte Kurve rechtwinklig schneiden, konvex verläuft. Die Schnittlinien mit den dritten Ebenen können eine Folge von geradlinigen Abschnitten aufweisen, welche einen Polygonzug bilden, in welchem der Winkel zwischen aufeinanderfolgenden Abschnitten vom einen Ende des Polygonzuges bis zum anderen Ende des Polygonzuges zunimmt. Die Schnittlinien können abschnittsweise aber auch eine Krümmung aufweisen oder stetig gekrümmt sein, wobei die Krümmung vorzugsweise vom einen Ende bis zum anderen Ende der Schnittlinie zunimmt. Eine solche asymmetrische Kontur, welche sich - bezogen auf die Felge - in Querrichtung der Felge erstreckt, ist besonders geeignet, das Formteil auch an Felgen mit hohen Maßabweichungen und an Felgen mit nicht-zylindrischem Felgenbett hinreichend fest zu befestigen, gegebenenfalls auch am Rande des Felgenbettes, wo dieses beginnt, in eine Schulter überzugehen. Die Kontaktfläche eines so weitergebildeten Formteils hat eine Gestalt, die einem halben Sattel ähnelt.

Für die stoffschlüssige Verbindung des Formteils mit einer Felge kommen vor allem Klebstoffe in Frage, insbesondere solche, die aushärtbar sind, wie zum Beispiel Zweikomponenten-Epoxidharze und Zweikomponenten-SE-Polymere, welche Klebespalte bis zu einer Höhe von mindestens 1 mm erlauben. Kalt aushärtende Kleber werden aus Gründen der Prozeßökonomie bevorzugt. Grundsätzlich ist es aber auch möglich, mit warm aushärtenden Klebern zu arbeiten. Die Haftung der Klebstoffe kann durch geeignete Ausbildung oder Vorbehandlung der Klebeflächen in an sich bekannter Weise gefördert werden, zum Beispiel durch Aufrauhen, Ätzen und Strukturieren der Klebeflächen oder durch Vorsehen von Hinterschneidungen.

Eine stoffschlüssige Verbindung könnte auch metallurgisch hergestellt werden, jedoch wäre das gegenüber einer Klebeverbindung aufwendiger.

Ausführungsbeispiele der Erfindung sind schematisch in den beigefügten Zeichnungen dargestellt. Dabei sind die Größenverhältnisse übertrieben dargestellt, um das wesentliche der Erfindung deutlicher werden zu lassen. Gleiche oder einander entsprechende Teile sind in den Beispielen mit übereinstimmenden Bezugszahlen bezeichnet.
- Figur 1: zeigt ein Formteil mit einer Kontaktfläche, welche eine Folge von unterschiedlich gekrümmten Abschnitten aufweist, in einer Schrägansicht,
- Figur 2: zeigt das Formteil aus Figur 1 in einer Seitenansicht, angelegt an ein Felgenbett mit großem Durchmesser,
- Figur 3: zeigt das Formteil aus Figur 1 in einer Seitenansicht, angelegt an ein Felgenbett mit kleinem Durchmesser,
- Figur 4: zeigt ein Formteil in einer Seitenansicht, dessen Kontaktfläche eine sich stetig ändernde Krümmung aufweist,
- Figur 5: zeigt eine Abwandlung des in Figur 4 dargestellten Formteils in einer Seitenansicht, und
- Figuren 6 bis 11: zeigen jeweils ein Formteil, angelegt an ein Felgenbett, dargestellt in einem Radialschnitt bezüglich der Drehachse der Felge, für unterschiedliche Konturen des Felgenbettes und der Kontaktfläche des Formteils.

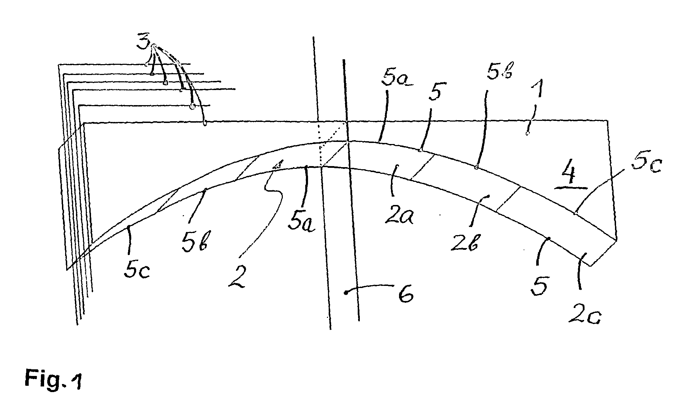

Das in Figur 1 dargestellte Formteil 1 hat eine im großen und ganzen konkav verlaufende Kontaktfläche 2. Eine Schar von ersten Ebenen 3, welche parallel zueinander verlaufen und von denen eine mit der vorderen Seitenfläche 4 des Formteils zusammenfällt, schneidet das Formteil in Kurven 5, welche eine Folge von Abschnitten 5a, 5b, 5c haben und unterschiedlich gekrümmt sind und zwar in der Weise, dass die Krümmung ausgehend von dem Abschnitt 5a, welcher einer zweiten Ebene 6 am nächsten liegt, welche die Ebenen 3 rechtwinklig schneidet und die Kontaktfläche 2 teilt, mit zunehmendem Abstand von der zweiten Ebene 6 kleiner wird, so dass der Abschnitt 5a den kleinsten Krümmungsradius und der Abschnitt 5c den größten Krümmungsradius hat. Dadurch besteht die Kontaktfläche 2 zu beiden Seiten der zweiten Ebene 6 aus einer Folge von unterschiedlich gekrümmten Abschnitten 2a, 2b und 2c, welche unmittelbar aneinander anschließen. Im gezeichneten Beispiel handelt es sich bei dem Abschnitten 2a, 2b und 2c jeweils um Ausschnitte aus einer Zylindermantelfläche.

Die Anordnung ist bezüglich der zweiten Ebene 6 spiegelbildlich, so dass der Abschnitt 2a der Kontaktfläche sich übergangslos von der einen Seite der zweiten Ebene 6 zur anderen Seite der zweiten Ebene 6 erstreckt und sich die anderen Abschnitte 2b und 2c nach außen hin anschließen. Die gleich bezeichneten Abschnitte 2b bzw. 5b, welche auf unterschiedlichen Seiten der zweiten Ebene 6 liegen, haben dieselbe Krümmung und denselben Krümmungsmittelpunkt, welcher auf der zweiten Ebene 6 liegt. Entsprechendes gilt für die übrigen gleich bezeichneten Abschnitte 5c bzw. 2c.

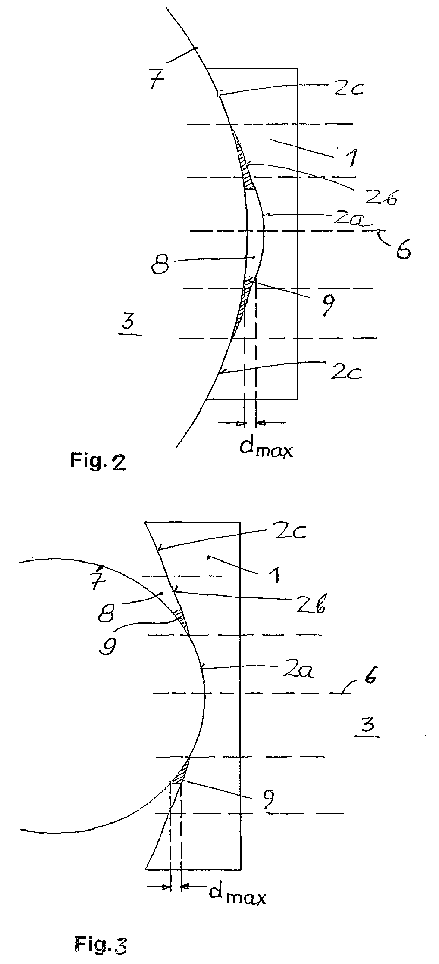

Legt man ein solches Formteil gemäß Figur 2 an ein zylindrisches Felgenbett 7 mit großem Durchmesser an, dann kann sich das Formteil 1 mit den äußeren Abschnitten 2c einer Kontaktfläche 2 an das Felgenbett 7 anschmiegen. Wird das Formteil 1 mit dem Felgenbett 7 verklebt, dann kann sich im Bereich des Abschnittes 2c der Kontaktfläche eine Klebstoffschicht mit im wesentlichen konstanter Schichtdicke ausbilden. Vom Rand des äußeren Abschnittes 2c aus öffnet sich in Richtung der zweiten Ebene 6 zwischen dem Felgenbett 7 und der Kontaktfläche 2 ein Spalt 8, der bis zu einer maximalen Höhe dₘₐₓ, welche von der Natur des Klebstoffes und von geforderten Zugfestigkeit der Klebeverbindung abhängt, zu der geforderten Zugfestigkeit der Klebeverbindung beiträgt, wenn er bis zur Spalthöhe dₘₐₓ mit Klebstoff angefüllt ist. Diese Zone, die bis zur Spalthöhe dₘₐₓ reicht, wird hier auch als Verbindungszone 9 bezeichnet.

Legt man das Formteil 1 gemäß Figur 3 an ein Felgenbett 7 von kleinen Durchmesser an, kann sich der innenliegende Abschnitt 2a der Kontaktfläche an das Felgenbett 7 anschmiegen und die Klebezone 9 erstreckt sich darüber hinaus ein Stück weit zu beiden Seiten des Abschnittes 2a in den Bereich des Abschnittes 2b hinein.

Bei einer Felge von mittlerem Durchmesser kann sich das Formteil 1 mit den Abschnitten 2b seiner Kontaktfläche 2 an das Felgenbett 7 anschmiegen. In dem Fall kann sich die Verbindungszone 9 zu beiden Seiten jedes der Abschnitte 2b in die Nachbarabschnitte 2a und 2c hinein erstrecken, jeweils bis zum erreichen der auslegungsgemäß festgesetzten maximalen Spaltbreite dₘₐₓ.

Das was in den Figuren 1 bis 3 am Beispiel von drei Abschnitten mit unterschiedlichem Krümmungsradius dargestellt ist, kann auf eine größere Anzahl von Abschnitten mit unterschiedlichen Krümmungsradien erweitert werden, abhängig von der Anzahl der unterschiedlichen Felgenbettdurchmesser, auf welche das Formteil 1 passen soll.

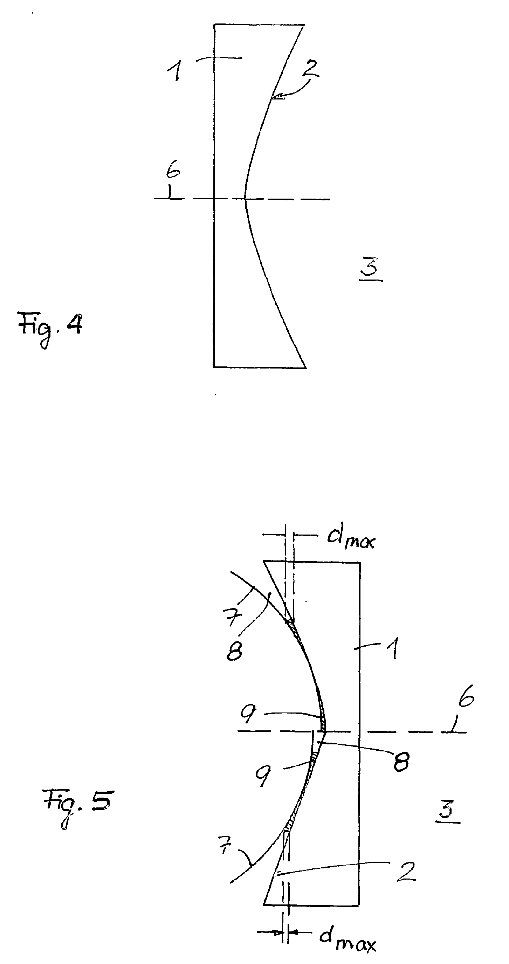

Das in Figur 4 dargestellte Ausführungsbeispiel zeigt in einer Seitenansicht ein Formteil 1, dessen Kontaktfläche 2 einen sich stetig verändernden Krümmungsverlauf aufweist, welcher sich als Grenzfall aus dem ersten Beispiel ergibt, wenn man dort die Anzahl der diskreten Abschnitte 2a, 2b, 2c der Kontaktfläche auf der vorgegebenen Gesamtlänge der Kontaktfläche 2 gegen unendlich streben läßt.

Das Ausführungsbeispiel gemäß Figur 5 ist gegenüber dem Ausführungsbeispiel in Figur 4 dadurch abgewandelt, dass die Kurve 5 auf der einen Seite der zweiten Ebene 6 eine Krümmung aufweist, welche mit zunehmenden Abstand von der zweiten Ebene 6 wie im Beispiel der Figur 4 stetig geringer wird, wohingegen die Kontaktfläche 2 auf der anderen Seite der zweiten Ebene 6 einen geradlinigen Verlauf hat. Man sieht an diesem Vergleich, dass in dem Bereich, wo die Kontaktfläche geradlinig begrenzt ist, die Länge der Verbindungszone 9 bis zum Erreichen einer maximalen Spalthöhe dₘₐₓ deutlich kürzer ist als auf der anderen Seite der zweiten Ebene 6.

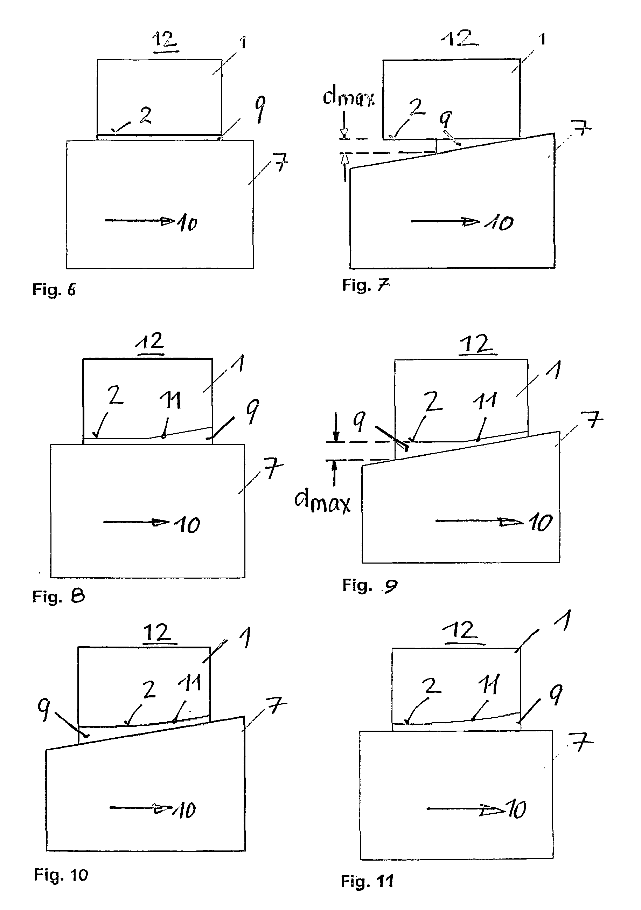

Die Figuren 6 bis 11 illustrieren die Anpassung der Kontaktfläche 2 an ein Felgenbett 7 in einer dritten Ebene, in welcher die Drehachse der Felge liegt, also in einer Radialebene der Felge. Diese dritte Ebene 12 ist in den Figuren 6 bis 11 jeweils die Zeichenebene, in den Figuren 2 bis 5 verläuft sie senkrecht zur Zeichenebene. Da es zur Verdeutlichung der Verhältnisse nur auf die Gestalt der beiden einander zugewandten Oberflächen des Felgenbettes 7 und des Formteils 1 ankommt, sind sowohl das Felgenbett 7 als auch das Formteil 1 stark vereinfacht nur blockförmig dargestellt.

Figur 6 illustriert den Fall, dass das Felgenbett 7 in dem Bereich, in welchem ihm das Formteil 1 anliegt, zylindrisch ausgebildet ist. In einer Querrichtung 10 des Felgenbettes 7, welche parallel zur Drehachse der Felge verläuft, kann man dann eine Verbindungszone 9 mit konstanter Spalthöhe haben, wenn die Kontaktfläche 2, wie in dem vorhergehenden Ausführungsbeispielen gezeichnet, entweder aus zylindrischen Abschnitten (Figuren 1 bis 3), aus ebenen Abschnitten, oder allgemein aus Abschnitten besteht, welche in der Querrichtung 10 geradlinig begrenzt sind. Leider ist das häufig nicht der Fall. Häufig ist das Felgenbett 7, wie in Figur 8 gezeichnet, konisch. Dann verkürzt sich die wirksame Verbindungszone 9, welche bis zur Spalthöhe dₘₐₓ reicht, in Abhängigkeit von dem Konuswinkel mehr oder weniger stark. Das ist unerwünscht. Dem kann man dadurch begegnen, dass man die Kontaktfläche 2 in der Querrichtung 10 nicht geradlinig begrenzt wie in Figur 6 und Figur 7, sondern durch einen Polygonzug, wodurch die Kontur der Kontaktfläche 2 in der Querrichtung 10 im großen und ganzen konvex wird. Das einfachste Beispiel, nämlich ein aus zwei geraden Abschnitten bestehender Polygonzug, ist in den Figuren 8 und 9 dargestellt. Man sieht, dass dadurch im Fall einer Felge mit exakt zylindrischem Felgenbett 7 die Verbindungszone 9 in der Querrichtung 10 zwar verkürzt wird, diese Einbuße wird jedoch dadurch wettgemacht, dass sich die Verbindungszone 9 gegenüber dem in Figur 8 dargestellten Fall verlängert, wenn man ein so ausgebildetes Formteil 1 mit einem konischen Felgenbett 7 verklebt, siehe Figur 9. Das Abwinkeln der Kontaktfläche 2 in der Querrichtung 10 stellt demnach einen vorteilhaften Kompromiss zwischen den beiden in Figur 6 und Figur 7 dargestellten Grenzfällen dar.

Der Verlauf der Kontaktfläche 2 in der Querrichtung 10 kann optimiert werden, indem man die Kontaktfläche 2 nicht nur einfach abwinkelt, wie in den Figuren 8 und 9, sondern indem man ihr mittels eines Polygonzuges, welcher sich als Schnittlinie 11 mit einer der dritten Ebenen 12 darstellt, eine Kontur gibt, wie sie in den Figuren 10 und 11 dargestellt ist, wobei die Krümmung im Mittel von einem Rand des Formteils 1 (in Figur 10 der linke Rand) zum gegenüberliegenden Rand des Formteils 1 zunimmt. Statt eines Polygonzuges kann für die Schnittlinie 11 auch eine ihr angenäherte stetige Krümmung in der Querrichtung 10 ausgebildet werden. Dadurch erhält die Kontaktfläche 2 eine Kontur, welche einem halben Sattel ähnlich ist. Sie stellt ein Optimum dar, um ein und dasselbe Formteil 1 für eine große Zahl unterschiedlicher Felgenbetten verwenden zu können.

### Bezugszahlenliste:

- 1.: Formteil
- 2.: Kontaktfläche
- 2a.: Abschnitt
- 2b.: Abschnitt
- 2c.: Abschnitt
- 3.: erste Ebenen
- 4.: Seitenfläche
- 5.: Kurve
- 5a.: Abschnitt
- 5b.: Abschnitt
- 5c.: Abschnitt
- 6.: Ebene
- 7.: Felgenbett
- 8.: Spalt
- 9.: Verbindungszone
- 10.: Querrichtung
- 11.: Polygonzug
- 12.: dritte Ebene

## Patentansprüche

1. Formteil zur Verbindung mit einer Felge an einer im Felgenbett (7) liegenden Stelle, mit einer zur Anlage am Felgenbett (7) bestimmten Kontaktfläche (2), **dadurch gekennzeichnet, daß** die Kontaktfläche (2) eine Schar von zueinander parallelen ersten Ebenen (3) jeweils entlang einer gekrümmten Kurve (5) schneidet, welche nicht lediglich ein Kreisbogen ist und deren Abstand von einer die Kontaktfläche (2) unterteilenden zweiten Ebene (6), welche senkrecht zu den ersten Ebenen (3) verläuft, auf wenigstens einer Seite der zweiten Ebene (6) wenigstens im Mittel mit einer abnehmenden Zuwachsrate zunimmt.

2. Formteil nach Anspruch 1, **dadurch gekennzeichnet, dass** die Zuwachsrate mit zunehmendem Abstand der Kurve (5) von der zweiten Ebene (6) bis auf einen Grenzwert abnimmt und bei weiter zunehmendem Abstand gleich bleibt.

3. Formteil nach Anspruch 1 oder 2, **dadurch gekennzeichnet, daß** die Kurve (5) eine konkave Folge aus gekrümmten Abschnitten (5a, 5b, 5c) aufweist, deren Krümmung mit zunehmendem Abstand von der zweiten Ebene (6) abnimmt.

4. Formteil nach Anspruch 3, **dadurch gekennzeichnet, daß** innerhalb eines gekrümmten Abschnitts (5a, 5b, 5c) die Krümmung längs der Kurve (5) konstant ist.

5. Formteil nach Anspruch 3 oder 4, **dadurch gekennzeichnet, daß** die unterschiedlich gekrümmten Abschnitte (5a, 5b, 5c) unmittelbar aneinander anschließen, wobei sich zwischen zwei aufeinanderfolgenden Abschnitten die Krümmung sprunghaft ändert.

6. Formteil nach einem der vorstehenden Ansprüche, **dadurch gekennzeichnet, daß** die Abschnitte (5a, 5b, 5c) annähernd gleich lang sind.

7. Formteil nach einem der Ansprüche 3 bis 5, **dadurch gekennzeichnet, daß** der der zweiten Ebene (6) am am nächsten liegende Abschnitt (5a) länger ist als die übrigen Abschnitte (5b, 5c), welche annähernd gleich lang sind oder mit größer werdendem Abstand von der zweiten Ebene kürzer werden.

8. Formteil, **dadurch gekennzeichnet, daß** die Kurve (5) wenigstens einen konkaven Abschnitt aufweist, welcher eine mit zunehmendem Abstand von der zweiten Ebene (6) stetig abnehmende Krümmung hat.

9. Formteil nach Anspruch 8, **dadurch gekennzeichnet, daß** wenigstens auf einer Seite der zweiten Ebene (6) die Kurve (5) auf ihrer ganzen Länge eine mit zunehmendem Abstand von der zweiten Ebene (6) abnehmende Krümmung hat.

10. Formteil nach einem der vorstehenden Ansprüche, **dadurch gekennzeichnet, daß** die Kurve (5) den beanspruchten Verlauf zu beiden Seiten der zweiten Ebene (6) aufweist.

11. Formteil nach Anspruch 10, **dadurch gekennzeichnet, daß** die Kurve (5) spiegelsymmetrisch in Bezug auf die zweite Ebene (6) verläuft.

12. Formteil nach Anspruch 10 oder 11, **dadurch gekennzeichnet, daß** je zwei Abschnitte der Kurve (5), welche auf unterschiedlichen Seiten der zweiten Ebene (6) liegen, eine übereinstimmende Krümmung und denselben Krümmungsmittelpunkt haben.

13. Formteil nach einem der vorstehenden Ansprüche, **dadurch gekennzeichnet, daß** die Kontaktfläche (2) längs der Schnittlinien (11) mit dritten Ebenen (12), welche die Kurve (5) rechtwinklig schneiden, konvex verläuft.

14. Formteil nach Anspruch 13, **dadurch gekennzeichnet, daß** die Schnittlinien (11) jeweils eine Krümmung aufweisen, welche von ihrem einen Ende bis zu ihrem anderen Ende zunimmt.

15. Formteil nach Anspruch 14, **dadurch gekennzeichnet, daß** die Krümmung der Schnittlinien (11) stetig zunimmt.

16. Formteil nach einem der vorstehenden Ansprüche, **dadurch gekennzeichnet, daß** es ein Gehäuse ist.

17. Formteil nach einem der Ansprüche 1 bis 15, **dadurch gekennzeichnet, daß** es ein Träger oder eine Halterung für ein Gehäuse ist.

18. Formteil nach Anspruch 16 oder 17, **dadurch gekennzeichnet, daß** das Gehäuse eine Einrichtung zum Messen des Drucks und/oder der Temperatur in einem Luftreifen enthält, welcher auf die Felge montiert ist.

19. Felge mit einem Formteil nach einem der vorstehenden Ansprüche, welches an seiner Kontaktfläche (2) stoffschlüssig mit der Felge an einer im Felgenbett (7) liegenden Stelle verbunden ist.

20. Felge nach Anspruch 19, **dadurch gekennzeichnet, daß** das Formteil (1) mit dem Felgenbett (7) verklebt ist.

## Claims

1. Shaped Object adapted for being connected with a rim at a point located inside the rim well (7), having a contact surface (2) intended to rest on the rim well (7), **characterized in that** the contact surface (2) intersects each of a set of mutually parallel first planes (3) along a curved curve (5), which is not merely an arc of a circle and whose distance from a second plane (6), that subdivides the contact surface (2) and that extends perpendicularly to the first planes (3), increases at least on one side of the second plane (6) with a growth rate, that decreases at least in average.

2. The shaped object as defined in Claim 1, **characterized in that** the growth rate decreases to a limit value as the distance of the curve (5) from the second plane (6) rises, and then remains constant as the distance continues to rise.

3. The shaped object as defined in Claim 1 or Claim 2, **characterized in that** the curve (5) comprises a concave succession of curved sections (5a, 5b, 5c) the curvature of which decreases as the distance from the second plane (6) rises.

4. The shaped object as defined in Claim 3, **characterized in that** the curvature along the curve (5) remains constant within a curved section (5a, 5b, 5c).

5. The shaped object as defined in Claim 3 or Claim 4, **characterized in that** the differently curved sections (5a, 5b, 5c) follow each other directly, with the curvature changing abruptly between two adjacent sections.

6. The shaped object as defined in any of the preceding claims, **characterized in that** the sections (5a, 5b, 5c) are approximately equal in length.

7. The shaped object as defined in any of Claims 3 to 5, **characterized in that** the section (5a) which is the nearest to the second plane (6) is longer than the remaining sections (5b, 5c) which are approximately equal in length or become shorter as their distance from the second plane increases.

8. Shaped Object, **characterized in that** the curve (5) comprises at least one concave section having a curvature that decreases continuously as the distance from the second plane (6) rises.

9. The shaped object as defined in Claim 8, **characterized in that** at least on one side of the second plane (6) the curve (5) over its full length has a curvature that decreases as the distance from the second plane (6) rises.

10. The shaped object as defined in any of the preceding claims, **characterized in that** the curve (5) shows the claimed shape on both sides of the second plane (6).

11. The shaped object as defined in Claim 10, **characterized in that that** the curve (5) extends mirror-symmetrically relative to the second plane (6).

12. The shaped object as defined in Claim 10 or Claim 11, **characterized in that** two sections each of the curve (5), lying on different sides of the second plane (6), have a conforming curvature and the same center of curvature.

13. The shaped object as defined in any of the preceding claims, **characterized in that** the contact surface (2) extends in convex shape along the lines of intersection (11) with third planes (12) that intersect the curve (5) perpendicularly.

14. The shaped object as defined in Claim 13, **characterized in that** the lines of intersection (11) each have a curvature that increases from their one end to their other end.

15. The shaped object as defined in claim 14, **characterized in that** the curvature of the lines of intersection (11) increases continuously.

16. The shaped object as defined in any of the preceding claims, **characterized in that** it is a housing.

17. The shaped object as defined in any of Claims 1 to 15, **characterized in that** it is a carrier or a holder for a housing.

18. The shaped object as defined in Claim 16 or Claim 17, **characterized in that** the housing contains a device for measuring the pressure and/or the temperature in a pneumatic tire which is mounted on the rim.

19. Rim with a shaped object as defined in any of the preceding claims, which has its contact surface (2) connected with the rim at a point inside the rim well (7) by a substance connection.

20. Rim as defined in Claim 19, **characterized in that** the shaped object (1) is bonded to the rim well (7).

## Revendications

1. Élément moulé à des fins de liaison avec une jante à un endroit disposé dans l'embase de jante (7), comprenant une surface de contact déterminée (2) destinée à venir s'appliquer contre l'embase de jante (7), **caractérisé en ce que** la surface de contact (2) coupe un réseau de premiers plans (3) parallèles les uns aux autres, respectivement le long d'une courbe arquée (5) qui ne représente pas simplement un arc de cercle et dont la distance par rapport à un deuxième plan (6) subdivisant la surface de contact (2), ledit plan s'étendant perpendiculairement aux premiers plans (3), sur un côté du deuxième plan (6) augmente au moins en moyenne avec un taux de croissance qui diminue.

2. Élément moulé selon la revendication 1, **caractérisé en ce que** le taux de croissance diminue de manière proportionnelle à l'augmentation de la distance de la courbe (5) par rapport au deuxième plan (6) jusqu'à une valeur limite, puis reste égal lors de l'augmentation ultérieure de ladite distance.

3. Élément moulé selon la revendication 1 ou 2, **caractérisé en ce que** la courbe (5) présente une suite concave de tronçons arqués (5a, 5b, 5c) dont la courbure diminue de manière proportionnelle à l'augmentation de la distance par rapport au deuxième plan (6).

4. Élément moulé selon la revendication 3, **caractérisé en ce que**, au sein d'un tronçon arqué (5a, 5b, 5c), la courbure est constante le long de la courbe (5).

5. Élément moulé selon la revendication 3 ou 4, **caractérisé en ce que** les tronçons (5a, 5b, 5c) présentant des courbures différentes se raccordent les uns aux autres sans intermédiaire, la courbure se modifiant par saut entre deux tronçons successifs.

6. Élément moulé selon l'une quelconque des revendications précédentes, **caractérisé en ce que** les tronçons (5a, 5b, 5c) possèdent approximativement la même longueur.

7. Élément moulé selon l'une quelconque des revendications 3 à 5, **caractérisé en ce que** le tronçon (5a) le plus proche du deuxième plan (6) est plus long que les tronçons restants (5b, 5c) qui possèdent approximativement la même longueur ou bien qui se raccourcissent de manière proportionnelle à l'augmentation de la distance par rapport au deuxième plan.

8. Élément moulé, **caractérisé en ce que** la courbe (5) présente au moins un tronçon concave qui possède une courbure qui diminue en continu de manière proportionnelle à l'augmentation de la distance par rapport au deuxième plan (6).

9. Élément moulé selon la revendication 8, **caractérisé en ce que**, au moins d'un côté du deuxième plan (6), la courbe (5) possède, sur toute sa longueur, une courbure qui diminue de manière correspondante à l'augmentation de la distance par rapport au deuxième plan (6).

10. Élément moulé selon l'une quelconque des revendications précédentes, **caractérisé en ce que** la courbe (5) présente l'allure revendiquée des deux côtés du deuxième plan (6).

11. Élément moulé selon la revendication 8, **caractérisé en ce que** l'allure de la courbe (5) s'étend en symétrie spéculaire par rapport au deuxième plan (6).

12. Élément moulé selon la revendication 10 ou 11, **caractérisé en ce que** deux tronçons de la courbe (5), qui sont disposés sur des côtés différents du deuxième plan (6), possèdent une courbure concordante et le même centre de courbure.

13. Élément moulé selon l'une quelconque des revendications précédentes, **caractérisé en ce que** la surface de contact (2) présente une allure convexe le long des lignes de coupe (11) avec trois plans (12) qui coupent la courbe (5) à angle droit.

14. Élément moulé selon la revendication 13, **caractérisé en ce que** les lignes de coupe (11) présentent respectivement une courbure qui augmente d'une de leurs extrémités à leur autre extrémité.

15. Élément moulé selon la revendication 14, **caractérisé en ce que** la courbure des lignes de coupe (11) augmente de manière constante.

16. Élément moulé selon l'une quelconque des revendications précédentes, **caractérisé en ce qu'**il s'agit d'un logement.

17. Élément moulé selon l'une quelconque des revendications 1 à 15, **caractérisé en ce qu'**il s'agit d'un support ou d'un dispositif de fixation pour un logement.

18. Élément moulé selon la revendication 16 ou 17, **caractérisé en ce que** le logement contient un dispositif de mesure de la pression et/ou de la température dans un bandage pneumatique qui est monté sur la jante.

19. Jante comprenant un élément moulé selon l'une quelconque des revendications précédentes, qui est relié, le long de sa surface de contact (2) sans intermédiaire avec la jante à un endroit disposé dans l'embase de jante (7).

20. Jante selon la revendication 19, **caractérisée en ce que** l'élément moulé (1) est collé à l'embase de jante (7).
